# DEMANDE DE BREVET EUROPEEN

(11) **EP 1 688 642 A2**
(43) Date de publication de la demande: **09.08.2006**
(21) Numéro de dépôt: 05027134.5
(22) Date de dépôt: 12.12.2005
(51) Int. Cl.: F16G 11/10, A43C 7/00

(54) **Bloqueur de lacet rapide**

(30) Priorité: 04.02.2005 FR 0501120
(71) Demandeur: Salomon S.A., 74370 Metz-Tessy (FR)
(72) Inventeur: Borsoi, Bruno, 31029 Vittorio Veneta (TV) (IT)

(57) **Abrégé**

Dispositif de blocage (15), d'au moins un fil (10), comportant un corps creux (17), un organe de blocage (18), et un organe de commande (19). Une cavité (30) du corps creux (17) définit un logement de l'organe de blocage (18).

L'organe de commande (19) permet de solliciter l'organe de blocage (18) pour un déplacement dans un sens de blocage ou de déblocage du fil (10).

Un moyen de verrouillage réversible retient de manière stable l'organe de commande (19) dans une position de déblocage du fil (10).

## Description

L'invention concerne un dispositif mécanique de blocage de brins souples tels que des câbles, des cordes, des fils, des lacets, ou tout autre produit présenté sous un aspect similaire.

L'invention a trait plus particulièrement au blocage des lacets de chaussures en vue du serrage de celles-ci. Ainsi l'invention se rapporte aussi à une chaussure équipée avec un dispositif de blocage, ou à un système de serrage à lacet équipé avec un dispositif de blocage.

L'invention concerne plus particulièrement encore le domaine du sport, et notamment les chaussures de surf sur neige ou snowboard, de ski de piste, de ski de fond, de patin à roues ou à lame, de vélo, de randonnée, de marche, ou autre, ainsi que des systèmes de serrage de fixations, des articles tels que des sacs à dos comportant de tels brins, en vue du serrage et/ou de la compression de ces produits ou de parties de ceux-ci.

Il est connu de bloquer des brins souples à l'aide d'un dispositif.

Par exemple le document FR 2 706 743 divulgue un dispositif de blocage agissant pour au moins un fil. Selon ce document le dispositif comporte un poussoir définissant l'axe de rotation d'un organe de blocage, ainsi qu'un corps creux dont une cavité définit d'une part au moins un chemin de passage pour chaque brin de fil, et d'autre part un logement de l'organe de blocage. Ce dernier est de forme circulaire et libre en rotation autour de l'axe lui-même mobile en translation.

Le dispositif selon le document FR 2 706 743 fonctionne par coopération de l'organe de blocage avec chaque chemin pour le blocage de chaque brin de fil par effet de coincement. L'organe de blocage est sollicité élastiquement dans le sens de blocage du ou des brins de fil par action sur son axe de rotation. La sollicitation élastique empêche un déblocage intempestif.

Ainsi, bien qu'étant sollicité élastiquement, l'organe de blocage demeure libre en rotation et permet d'équilibrer les tensions sur les deux brins du fil même en cas de différence entre les efforts exercés sur les brins. Le blocage est donc toujours réalisé.

L'opération inverse, celle de déblocage, est obtenue par action manuelle sur le poussoir contre la sollicitation élastique. Le déblocage est effectif tant que l'action manuelle perdure. Si cette dernière cesse, alors la sollicitation élastique remet le dispositif dans une situation de blocage. En conséquence il est nécessaire de maintenir l'action manuelle pendant toute la durée de passage du fil lors du déblocage. Cela peut être fastidieux dans la mesure où, généralement, il faut d'une part agir sur le dispositif avec une main et, simultanément, agir sur le fil avec l'autre main, surtout si la longueur de fil devant être libérée est importante, par exemple dans le cas d'une chaussure que l'on souhaite ouvrir totalement pour l'enlever.

Afin de simplifier l'opération de déblocage, notamment pour éviter d'avoir à maintenir une action manuelle de déblocage, il peut être fait appel à un dispositif non pourvu de moyen élastique.

Par exemple le document US 4,807,333 propose un dispositif de blocage qui agit pour au moins un fil. Le dispositif comporte un axe de rotation pour un organe de blocage et un corps creux, dont une cavité définit d'une part au moins un chemin de passage pour chaque brin de fil et, d'autre part, un logement de l'organe de blocage. Ce dernier est de forme circulaire et libre en rotation autour de l'axe, lui-même mobile dans un plan sensiblement parallèle à l'organe de blocage. Le dispositif fonctionne par coopération de l'organe de blocage avec chaque chemin pour le blocage de chaque brin de fil par effet de coincement. Un organe de commande permet de solliciter l'axe de rotation de l'organe de blocage pour un déplacement dans un sens de blocage ou de déblocage du ou des brins de fil.

Ainsi, selon le document US 4,807,333 , il suffit d'agir momentanément sur l'organe de commande pour mettre le dispositif dans une situation de déblocage. Il n'est pas nécessaire d'agir en même tant sur le dispositif avec une main et sur le fil avec l'autre main.

Il est toutefois apparu que, lors de l'utilisation du dispositif selon le document US 4,807,333 , l'organe de blocage reprend parfois une position de blocage alors qu'il n'est pas sollicité pour cela par une action sur l'organe de commande. Les manipulations du dispositif amènent parfois un blocage non désiré. Par exemple la gravité peut solliciter l'organe de blocage dans un sens de blocage. Ou bien des frottements du ou des fils sur l'organe de blocage peuvent parfois entraîner ce dernier vers une position de blocage. En d'autres termes l'organe de blocage ne reste pas en position de déblocage de manière stable. Inversement l'organe de blocage ne reste pas par contre dans la position de blocage du fait de l'absence de sollicitation élastique.

L'invention a pour but de proposer un dispositif de blocage amélioré. Notamment, dans le cas d'un dispositif de blocage non pourvu de moyen élastique au sens du document FR 2 706 743, l'invention cherche à rendre stable la position de déblocage d'un organe de blocage.

Pour ce faire l'invention propose un dispositif de blocage, agissant pour au moins un fil, comportant notamment un organe de blocage, comportant également un corps creux dont une cavité définit d'une part au moins un chemin de passage pour chaque brin de fil, et d'autre part un logement pour l'organe de blocage, le dispositif fonctionnant par coopération de l'organe de blocage avec chaque chemin pour le blocage de chaque brin de fil par effet de coincement, un organe de commande étant associé à l'organe de blocage et permettant de solliciter l'organe de blocage pour un déplacement dans un sens de blocage ou de déblocage du ou des brins de fil.

Le dispositif selon l'invention est caractérisé par le fait qu'il comporte un moyen de verrouillage réversible qui retient de manière stable l'organe de commande dans une position de déblocage du ou des brins de fil.

Le moyen de verrouillage réversible empêche tout mouvement non désiré de l'organe de commande et, par voie de conséquence, tout mouvement non désiré de l'organe de blocage. C'est pourquoi, après qu'il a été mis en position de déblocage, le dispositif reste naturellement en position de déblocage. L'opération de desserrage qui implique de maintenir le dispositif de blocage en position de déblocage est donc facilitée, puisqu'elle ne nécessite plus une action manuelle sur le dispositif pour maintenir le déblocage. Le corollaire est que tout blocage ultérieur sera le résultat d'une opération désirée. Parmi les avantages qui en découlent on peut citer le gain de temps, ou la facilité de manipulation du dispositif.

Le dispositif de blocage selon l'invention est aussi caractérisé par le fait que l'organe de blocage est déplaçable selon une direction longitudinale du dispositif de blocage entre une première position de blocage de chaque brin de fil et une deuxième position de déblocage de chaque brin de fil, et par le fait que l'organe de commande est guidé entre chacune de ces positions par une cavité inclinée par rapport à la direction longitudinale.

Ainsi tout déplacement de l'organe de commande au niveau de la cavité entraîne un déplacement de l'organe de blocage dans une direction longitudinale, soit pour un blocage, soit pour un déblocage. Un faible déplacement en direction longitudinale est suffisant pour passer d'une position de blocage à une position de déblocage.

Le dispositif de blocage selon l'invention est également caractérisé par le fait que la cavité comporte une première extrémité destinée à coopérer par encliquetage avec un élément associé de l'organe de commande en position de déblocage.

Cette structure permet une mise en oeuvre simple et facile du dispositif.

L'invention est encore caractérisée par le fait que l'organe de commande est entraîné par au moins un brin de fil dans le sens de blocage ou dans le sens de déblocage.

Dans ce cas il suffit d'écarter le fil, soit pour obtenir le blocage, soit pour obtenir le déblocage.

Selon une forme de réalisation qui sera décrite en détail après, le dispositif de blocage est caractérisé par le fait que l'organe de blocage est de forme circulaire, qu'il comprend un axe de rotation pour l'organe de blocage, l'organe de blocage étant libre en rotation autour de l'axe lui-même mobile dans un plan sensiblement parallèle à l'organe de blocage, l'organe de commande permettant de solliciter l'axe de rotation de l'organe de blocage pour un déplacement dans un sens de blocage ou de déblocage du ou des brins de fil. De plus l'organe de blocage est muni de dents.

Une telle structure permet un équilibrage des tensions dans les brins de fil, de par la rotation de l'organe de blocage.

D'autres caractéristiques et avantages de l'invention seront mieux compris à l'aide de la description qui va suivre, en regard du dessin annexé illustrant, selon une forme de réalisation non limitative, comment l'invention peut être réalisée, et dans lequel :
- la figure 1 est une vue d'ensemble d'une chaussure comportant, notamment, des fils et un dispositif de blocage selon la forme de réalisation décrite de l'invention,
- la figure 2 est une vue du dispositif de blocage de la figure 1 en perspective éclatée,
- la figure 3 est une vue extérieure de dessus du dispositif de blocage en position de déblocage des fils,
- la figure 4 est une vue en coupe, selon les lignes de contact des fils et des chemins, du dispositif en position de déblocage,
- la figure 5 est similaire à la figure 4, dans une situation intermédiaire entre le déblocage et le blocage des fils,
- la figure 6 est similaire à la figure 4, dans une situation de blocage des fils,
- la figure 7 est une coupe selon VII-VII de la figure 5,
- la figure 8 est une coupe selon VIII-VIII de la figure 7.

Bien que la forme de réalisation décrite après se rapporte plutôt au domaine du snowboard, il doit être compris qu'elle s'applique aussi à d'autres domaines comme évoqué avant.

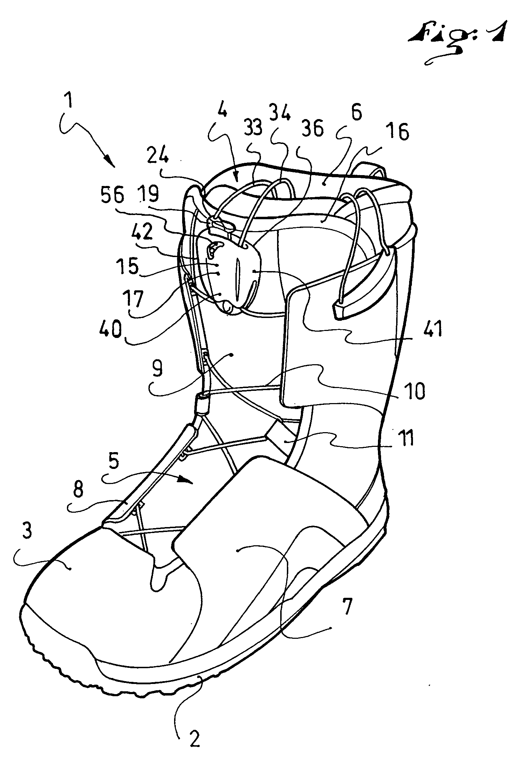

La forme de réalisation décrite est présentée à l'aide des figures 1 à 8.

Comme le montre la figure 1, une chaussure de snowboard 1 comprend une semelle de marche 2 surmontée d'une tige 3. Une ouverture 4 de la tige 3 présente une fente 5 reliée à un oeil 6. La fente 5 sépare un quartier latéral 7 d'un quartier médial 8 de la tige 3, ce qui permet un chaussage ou un déchaussage par éloignement puis rapprochement relatif des quartiers 7, 8. L'oeil 6 est une subdivision de l'ouverture 4 qui sert de passage au bas de jambe d'un utilisateur. En complément, une languette 9 est prévue pour obturer la fente 5.

Pour serrer ou desserrer la tige 3, il est prévu un moyen de serrage réversible. Celui-ci comprend un fil ou lacet 10 qui contribue à rapprocher ou, au contraire, à laisser s'éloigner l'un de l'autre, les quartiers latéral 7 et médial 8. Le lacet 10 suit un parcours au niveau de la fente 5, entre les quartiers 7, 8. Des passants 11 disposés de chaque côté de la fente, sur les bords des quartiers 7, 8, sont prévus pour guider le lacet 10.

Le moyen de serrage de la tige 3 comprend également un dispositif de blocage 15 du lacet 10. Le dispositif 15 est par exemple assujetti à la languette 9 par tout moyen, tel qu'un vissage, un rivetage, un collage, une couture, ou autre. Il 15 peut également être monté libre sur la tige.

Plus précisément le dispositif de blocage 15 se situe vers une extrémité libre 16 de la languette. Cela permet, on le comprendra mieux par la suite, une manipulation plus aisée du moyen de serrage de la tige 3. Cependant il pourrait alternativement être prévu que le dispositif de blocage 15 soit situé ailleurs sur la languette 9, ou même non assujetti à la languette.

Comme le montre plus particulièrement la figure 2, le dispositif de blocage 15 comprend trois pièces qui sont un corps creux 17, un organe de blocage 18 de forme circulaire et un organe de commande 19 logé en partie à l'intérieur du corps 17 et relié à l'organe de blocage 18 pour la manoeuvre de celui-ci.

L'organe de blocage 18 comprend par exemple une roue munie de dents 20 à sa périphérie. Le centre de la roue 18 est percé par un trou 21, pour l'accueil d'un axe 22 issu de l'organe de commande 19. La roue 18 et l'organe de commande 19 sont associés par emboîtement de la roue 18 sur l'axe 22. Le trou 21 et l'axe 22 présentent respectivement une forme circulaire, ce qui permet une rotation de la roue 18 autour de l'axe. Cependant il pourrait alternativement être prévu que la roue soit montée non rotative, ou bien que la roue soit remplacée par une pièce fixe de forme différente. Dans ce dernier cas un coin peut convenir.

Selon la forme de réalisation décrite l'axe 22, qui guide la roue 18, est situé au niveau d'une extrémité intérieure 23 de l'organe de commande 19. Ce dernier présente une autre extrémité 24 dite extérieure laquelle, on le verra par la suite, fait saillie par rapport au corps creux 17.

Tel que montré par exemple à la figure 4 le corps creux 17 comporte intérieurement une cavité 30 destinée au logement de la roue dentée 18 et définit, ainsi qu'on le verra plus loin, un premier 31 et un deuxième 32 chemins pour le passage et le coincement d'un premier 33 et d'un deuxième 34 brins du fil ou lacet 10.

Pour le montage du dispositif de blocage 15, la roue 18 est d'abord positionnée sur l'axe 22 de l'organe de commande 19. Ensuite ce dernier est introduit dans la cavité 30 du corps creux 17. Pour cela une ouverture 35 est prévue à une extrémité axiale 36 du corps creux. De manière complémentaire il est prévu un moyen de retenue, afin de maintenir la roue 18 et l'organe de commande 19 dans la cavité 30. Ce moyen comprend par exemple un doigt 37, issu de l'organe de commande 19 pour coopérer avec une cavité 38 ménagée dans une paroi de liaison 39 du corps creux. Le doigt 37 prolonge l'axe 22 de l'organe de commande 19. La cavité 38 quant à elle, comme on le voit sur les figures 4 à 8, est réalisée sous la forme d'une rainure de guidage qui peut traverser ou non la paroi de liaison 39. La rainure 38 est orientée dans le sens de la longueur du corps creux 17. Cette rainure 38 présente une largeur égale ou légèrement supérieure au diamètre du doigt 37, ainsi qu'une longueur suffisante pour autoriser un déplacement longitudinal de l'organe de blocage 18 entre une position de déblocage et une position de blocage. Cette disposition rend l'axe 22 mobile dans un plan parallèle à la roue 18.

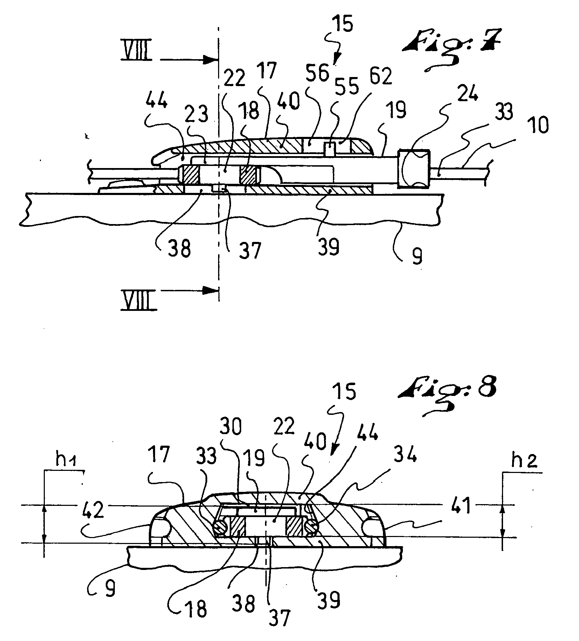

On remarque sur la figure 8 que l'épaisseur cumulée "h1", de l'organe de commande 19, de l'axe 22 et du doigt 37, est supérieure à la distance "h2" qui sépare la paroi de liaison 39 d'une paroi de couverture 40 du corps creux 17. Ainsi l'introduction de l'organe de commande 19 dans la cavité 30 est faite en force, en jouant sur l'élasticité du corps creux 17. Ce dernier se déforme élastiquement de manière réversible pour autoriser le passage de l'organe de commande 19. On obtient un effet d'encliquetage grâce au doigt 37, qui empêche le démontage de l'organe de commande 19. Ainsi le montage du dispositif par encliquetage est simple, dans le sens où aucun élément supplémentaire tel qu'une vis n'est nécessaire.

Les figures 4 à 8 montrent plus particulièrement la réalisation des chemins 31, 32 et la coopération de l'organe de blocage ou roue 18 avec ceux-ci.

Les chemins 31, 32 sont situés dans la cavité 30, le long de chacune des deux faces latérales 41, 42 du corps 17, et comportent des stries 43.

Les chemins 31, 32 ont, pour recevoir les brins 33, 34, une section en forme de gorge qui peut être arrondie ou formée de segments droits 44, comme représenté sur la figure 8.

Comme le montrent les figures 4 à 6, les chemins 31, 32 sont sensiblement rectilignes et leurs directions non parallèles convergent pour se croiser sur l'axe de symétrie 45 du dispositif de blocage 15, dans la direction "S".

Il existe deux positions extrêmes de l'organe de commande 19 qui correspondent l'une au blocage du lacet 10, l'autre au déblocage du lacet 10.

La position de blocage est représentée notamment aux figures 1 et 6.

Comme le montre la figure 6, en position de blocage la roue 18 serre les brins 33, 34 en appuyant sur ces derniers au fond des chemins 31, 32 du corps 17.

Le blocage des brins 33, 34 est donc réalisé par effet de coincement grâce à la coopération des chemins 31, 32 et de la roue 18. Le phénomène de coincement est accentué par l'élasticité de la chaussure 1, qui se manifeste suite au serrage par le lacet 10. L'élasticité de la chaussure exerce sur le lacet 10 une tension, laquelle est répercutée au niveau de la roue 18 par les brins 33,34.

L'avantage, procuré par le blocage par effet de coincement, est que la valeur de serrage des brins 33, 34 par la roue 18 est proportionnelle aux efforts de traction exercés sur les brins et résulte uniquement de ces efforts.

Un autre avantage, lié au fait que la roue 18 est libre en rotation autour de l'axe 22, est qu'une différence dans les efforts de traction F1, F2 sur les deux brins 33, 34 n'entraîne pas un coincement du système ou un glissement relatif de l'un des brins par rapport à l'organe de blocage 18.

Bien entendu on peut également obtenir un effet de blocage avec une roue ou un autre organe de blocage qui ne peut pas tourner.

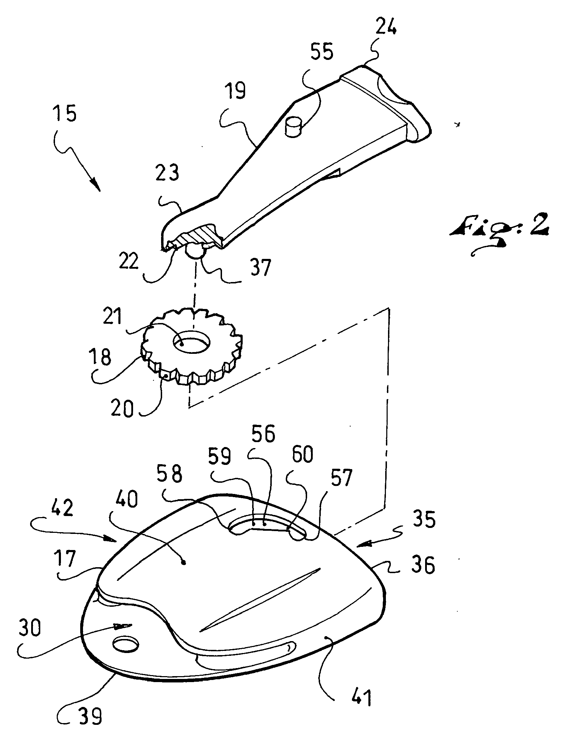

La position extrême de déblocage, quant à elle, est visible sur les figures 3 et 4.

Pour un maintien de l'organe de commande 19 dans cette position, selon l'invention, un moyen de verrouillage réversible retient de manière stable l'organe de commande 19 dans la position de déblocage du ou des brins 33, 34 du lacet 10.

Le moyen de verrouillage réversible fait appel au principe de l'emboîtement d'un élément mâle avec un élément femelle.

Selon la forme de réalisation décrite, l'élément mâle comprend un doigt de verrouillage 55 issu de l'organe de commande 19. Le doigt 55 est un élément associé de l'organe de commande 19. Le doigt 55 est situé entre les extrémités intérieure 23 et extérieure 24 de l'organe de commande 19. Le doigt 55 du moyen de verrouillage réversible est parallèle au doigt 37 du moyen de retenue.

L'élément femelle, quant à lui, présente l'aspect d'une cavité 56 ménagée dans la paroi de couverture 40 du corps creux pour accueillir le doigt de verrouillage 55. La cavité 56 s'apparente à une lumière car elle traverse la paroi 40, mais il pourrait alternativement être prévu qu'elle 56 ne la traverse pas. Encore, il pourrait être prévu que la cavité 56 soit ménagée dans la paroi de liaison 39.

Comme on le comprend à l'aide de l'ensemble des figures 1 à 8, la cavité 56 présente une première extrémité 57 et une deuxième extrémité 58 jointes par un couloir 59.

La première extrémité 57 est prévue pour accueillir le doigt de verrouillage 55. A ce titre la première extrémité 57 et le doigt 55 présentent chacun une forme qui permet leur emboîtement mutuel. La première extrémité 57 est une portion de cercle qui communique avec le couloir 59 par un rétrécissement 60. Le doigt 55 est un cylindre, dont le diamètre est égal ou légèrement inférieur à celui de la première extrémité. Bien entendu, d'autres formes que circulaire ou cylindrique peuvent être prévues. Le rétrécissement 60 présente une largeur légèrement inférieure au diamètre de la première extrémité 57, et légèrement inférieure au diamètre du doigt 55. Ainsi le passage du doigt 55 du couloir 59 à la première extrémité 57, ou vice versa, se fait à l'encontre d'un point dur créé par le rétrécissement 60 selon un effet d'encliquetage. Après son passage dans la première extrémité 57, le doigt de verrouillage 55 est maintenu dans une position stable et ne peut en sortir sauf en cas d'action spécifique sur celui-ci. La stabilité est due à la structure du moyen de verrouillage, en particulier de la cavité 56.

La deuxième extrémité 58 de la cavité 56 est aussi prévue pour accueillir le doigt de verrouillage 55. Cette extrémité 58 présente une forme qui permet une circulation libre du doigt 55. La deuxième extrémité 58 est un dégagement au moins aussi large que le diamètre du doigt de verrouillage 55, le dégagement présentant un fond arrondi 61. Le doigt 55 se retrouve dans le dégagement 58 quand le dispositif 15 est dans une situation de blocage. Dans ce cas la position du doigt de verrouillage 55 est également stable, mais cela est dû au coincement de la roue 18 entre les chemins 31, 32 du corps creux 17.

Le couloir 59 quant à lui guide le doigt de verrouillage 55 d'une extrémité 57, 58 à l'autre de la cavité 56. Le guidage se fait dans une direction oblique par rapport à la direction longitudinale du dispositif 15. Cela est dû aux localisations des extrémités 57, 58. La première 57 se situe près de l'extrémité axiale 36 et sensiblement à mi-chemin entre les faces latérales 41, 42 du corps creux 17. La seconde extrémité 58 quant à elle est à la fois plus éloignée de l'extrémité axiale 36 et plus proche d'une face latérale 42. Ainsi une droite "D" qui passe par les extrémités 57, 58 de la cavité 56 forme un angle "α" avec la direction longitudinale "L" du corps creux 17.

Plus concrètement le couloir 59 présente une première paroi concave 62, du côté de l'extrémité axiale 36 du corps creux 17, ainsi qu'une deuxième paroi sensiblement droite 63, en regard de la précédente 62. Bien entendu la deuxième paroi 63 est plus éloignée de l'extrémité axiale 36 du corps creux 17. Les deux parois 62, 63 donnent au couloir 59 une largeur variable. Cependant il pourrait alternativement être prévu que le couloir ait une largeur constante. Dans ce cas chaque parois 62, 63 peut être droite, ou incurvée. On peut aussi obtenir une largeur variable du couloir avec deux parois incurvées.

Pour débloquer le lacet 10, et desserrer la chaussure 1, le dispositif de blocage 15 est mis en position de déblocage comme on le voit notamment sur les figures 3 et 4.

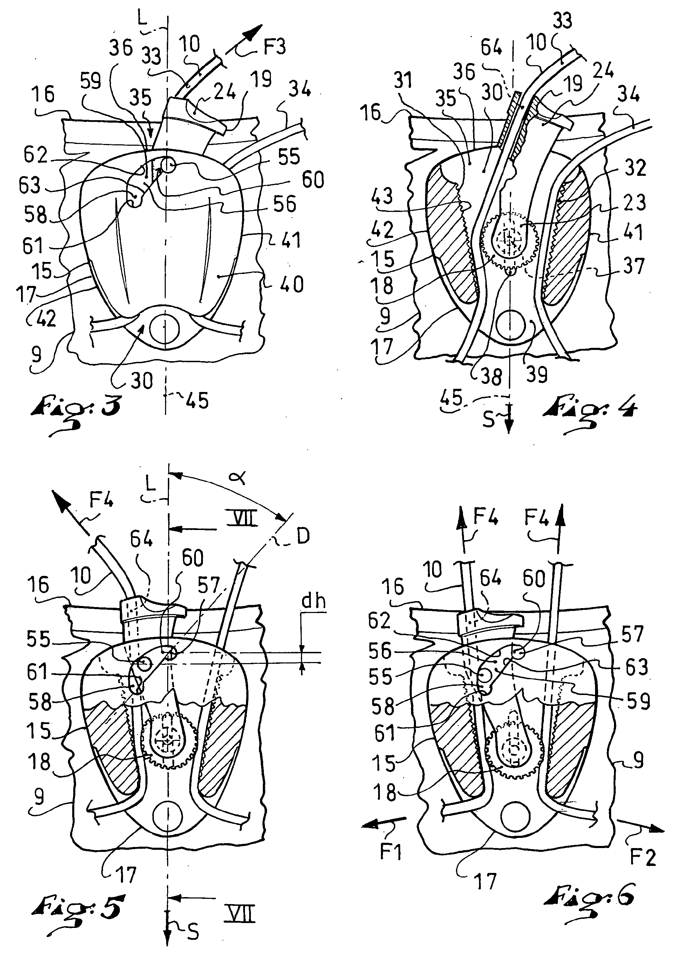

Pour cela il suffit de solliciter l'organe de commande 19 jusqu'à la mise en place du doigt de verrouillage 55 dans la première extrémité 57 de la cavité 56. Lors de son passage de sa position selon la figure 6 ou la figure 5 à sa position selon la figure 3, le doigt 55 se déplace en direction longitudinale "L" d'une valeur "dh" suffisante pour permettre le déblocage de l'organe de blocage 18. La sollicitation peut être directe, par action manuelle transversale sur l'extrémité extérieure 24 de l'organe de commande 19. Alternativement la sollicitation peut être indirecte, par traction transversale ou oblique selon la flèche "F3" sur le lacet 10.

Dans ce cas la sollicitation est transmise par le lacet 10 à l'organe de commande 19. En effet ce dernier 19 présente un passage 64 prévu pour qu'un brin 33 du lacet 10 le traverse. Bien entendu le brin 33 peut coulisser librement dans le passage 64, d'autant plus que ce dernier est sensiblement parallèle aux chemins 31, 32.

Dans chaque cas la sollicitation est orientée dans un sens d'éloignement de la face latérale 42 du corps creux 17, près de laquelle se trouve la deuxième extrémité 58 de la cavité 56. Ainsi le doigt de verrouillage 55 prend appui sur la deuxième paroi 63 du couloir 59, pour aller vers la première extrémité 57 de la cavité 56. Ce faisant, il 55 entraîne la roue 18 en position de déblocage car il la déplace d'une valeur "dh" en direction longitudinale.

Inversement pour bloquer le lacet 10, le dispositif de blocage 15 est mis en position de blocage comme on le voit notamment sur les figures 5 et 6.

Pour cela il suffit de solliciter l'organe de commande 19 jusqu'à la mise en place du doigt de verrouillage 55 dans le couloir 59, ou dans la deuxième extrémité 58 de la cavité 56. Le déplacement du doigt 55 le place dans la position de blocage par coulissement le long de la cavité ou lumière 56. Là encore la sollicitation peut être directe, par action manuelle transversale sur l'extrémité extérieure 24 de l'organe de commande 19. Ou bien la sollicitation peut être indirecte, par traction axiale ou oblique selon une flèche "F4" sur le lacet 10. Lorsqu'elle est directe, la sollicitation amène le doigt de verrouillage 55 en appui sur la première paroi 62 du couloir 59. Compte tenu de sa courbure la paroi 62 pousse le doigt 55 et donc la roue 18, non seulement latéralement mais aussi en direction longitudinale du fait de l'inclinaison de la cavité ou lumière 56, vers une position de blocage.

Lorsqu'elle est indirecte, la sollicitation amène aussi le doigt de verrouillage 55 en appui sur la première paroi 62 du couloir 59. En effet le brin 33 du lacet 10 transmet en partie au moins la sollicitation à l'organe de commande 19.

On observe ainsi à quel point le serrage de la chaussure est simple. La seule traction du lacet 10 exerce simultanément deux fonctions qui sont, d'une part, la mise en tension du lacet 10 et, d'autre part, la mise en place de la roue 18 en position de coincement des brins 33, 34. En effet, la traction sollicite l'organe de commande 19 vers la position de blocage. Le serrage peut se faire d'une seule main, puisque le dispositif de blocage 15 est solidarisé à la languette. De plus le serrage se fait avec un mouvement naturel, qui consiste à tirer le lacet 10 vers soi.

D'une manière générale, l'invention est réalisée à partir de matériaux et selon des techniques de mise en oeuvre connus de l'homme du métier.

En particulier, il est préféré de réaliser chaque composant à partir d'une matière plastique.

Bien entendu l'invention n'est pas limitée à la forme de réalisation ci-avant décrite, et comprend tous les équivalents techniques pouvant entrer dans la portée des revendications qui vont suivre.

Notamment, il n'est pas nécessaire qu'un brin de fil traverse l'organe de commande 19.

D'autre part, une autre structure que le doigt 55 et la cavité 56 peut être prévue pour réaliser le moyen de verrouillage réversible.

## Revendications

1. Dispositif de blocage (15), agissant pour au moins un fil (10), comportant notamment un organe de blocage (18), comportant également un corps creux (17) dont une cavité (30) définit d'une part au moins un chemin de passage (31, 32) pour chaque brin de fil (33, 34), et d'autre part un logement pour l'organe de blocage (18), le dispositif (15) fonctionnant par coopération de l'organe de blocage (18) avec chaque chemin (31, 32) pour le blocage de chaque brin de fil (33, 34) par effet de coincement, un organe de commande (19) étant associé à l'organe de blocage (18) et permettant de solliciter l'organe de blocage (18) pour un déplacement dans un sens de blocage ou de déblocage du ou des brins de fil (33, 34),
**caractérisé par le fait qu'**il comporte un moyen de verrouillage réversible qui retient de manière stable l'organe de commande (19) dans une position de déblocage du ou des brins de fil (33, 34).

2. Dispositif de blocage (15) selon la revendication 1, **caractérisé par le fait que** l'organe de blocage (18) est déplaçable selon une direction longitudinale du dispositif de blocage (15) entre une première position de blocage de chaque brin de fil (33, 34) et une deuxième position de déblocage de chaque brin de fil (33, 34), et **par le fait que** l'organe de commande (19) est guidé entre chacune de ces positions par une cavité (56) inclinée par rapport à la direction longitudinale.

3. Dispositif de blocage (15) selon la revendication 2, **caractérisé par le fait que** la cavité (56) comporte une première extrémité (57) destinée à coopérer par encliquetage avec un élément associé (55) de l'organe de commande (19) en position de déblocage.

4. Dispositif de blocage (15) selon la revendication 2 ou 3, **caractérisé par le fait que** l'organe de commande (19) est entraîné par au moins un brin de fil (33, 34) dans le sens de blocage ou dans le sens de déblocage.

5. Dispositif de blocage (15) selon l'une des revendications 1 à 4, **caractérisé par le fait que** l'organe de blocage (18) est de forme circulaire.

6. Dispositif de blocage (15) selon la revendication 5, **caractérisé par le fait qu'**il comprend un axe de rotation (22) pour l'organe de blocage (18), l'organe de blocage (18) étant libre en rotation autour de l'axe (22) lui-même mobile dans un plan sensiblement parallèle à l'organe de blocage (18), l'organe de commande (19) permettant de solliciter l'axe de rotation (22) de l'organe de blocage (18) pour un déplacement dans un sens de blocage ou de déblocage du ou des brins de fil (33, 34).

7. Dispositif de blocage (15) selon la revendication 5 ou 6, **caractérisé par le fait que** l'organe de blocage (18) est muni de dents (20) à sa périphérie.

8. Dispositif de blocage (15) selon l'une des revendications 1 à 7, **caractérisé par le fait que** le moyen de verrouillage réversible (55, 56, 57) comprend un doigt de verrouillage (55) issu de l'organe de commande (19), et présente une cavité (56) ménagée dans une paroi (40) du corps creux (17) pour accueillir le doigt de verrouillage (55), la cavité (56) présentant une première extrémité (57) et une deuxième extrémité (58) jointes par un couloir (59), la première extrémité (57) communiquant avec le couloir (59) par un rétrécissement (60), le passage du doigt (55) du couloir (59) à la première extrémité (57), ou vice versa, se faisant à l'encontre d'un point dur créé par le rétrécissement (60).

9. Dispositif de blocage (15) selon la revendication 8, **caractérisé par le fait que** la première extrémité (57) de la cavité (56) se situe près d'une extrémité axiale (36) et sensiblement à mi-chemin entre les faces latérales (41, 42) du corps creux (17), et **par le fait que** la deuxième extrémité (58) de la cavité (56) est à la fois plus éloignée de l'extrémité axiale (36) et plus proche d'une face latérale (42).

10. Dispositif de blocage (15) selon la revendication 8 ou 9, **caractérisé par le fait que** la cavité (56), qui accueille le doigt de verrouillage (55), est ménagée dans une paroi de couverture (40) du corps creux.

11. Dispositif de blocage (15) selon l'une des revendications 1 à 10, **caractérisé par le fait qu'**un moyen de retenue maintient l'organe de blocage (18) et l'organe de commande (19) dans la cavité (30) du corps creux (17).

12. Dispositif de blocage (15) selon la revendication 11, **caractérisé par le fait que** le moyen de retenue comprend un doigt (37) issu de l'organe de commande (19), le doigt (37) étant prévu pour coopérer avec une cavité (38) ménagée dans une paroi (39) du corps creux (17).

13. Dispositif de blocage (15) selon l'une des revendications 1 à 12, **caractérisé par le fait que** l'organe de commande (19) présente un passage (64) prévu pour qu'un brin (33) du lacet (10) le traverse.

14. Chaussure (1) équipée avec un dispositif de blocage (15) selon l'une des revendications 1 à 13.

15. Système de serrage à lacet équipé avec un dispositif de blocage (15) selon l'une des revendications 1 à 13.
